(19) Europäisches Patentamt

European Patent Office

Office européen des brevets

(11) Veröffentlichungsnummer: **0 671 420 A2**

(12) **EUROPÄISCHE PATENTANMELDUNG**

(21) Anmeldenummer: **95100169.2**

(22) Anmeldetag: **07.01.95**

(30) Priorität: **09.03.94 DE 4407842**

(43) Veröffentlichungstag der Anmeldung:
**13.09.95 Patentblatt 95/37**

(84) Benannte Vertragsstaaten:
**BE CH DE DK ES FR GB IT LI NL**

(51) Int. Cl.⁶: **C08F 220/12**, C09D 133/06

(71) Anmelder: **HÜLS AKTIENGESELLSCHAFT**

**D-45764 Marl (DE)**

(72) Erfinder: **Sauer, Thomas, Dr.**
**Annabergstr. 56b**
**D-45721 Haltern (DE)**

(54) **Schutzkolloid-stabilisierte Polyacrylat-Dispersionen.**

㊗ Diese Erfindung betrifft Schutzkolloid-stabilisierte Polyacrylat-Dispersionen mit verbesserter Wasserfestigkeit und guten Verlaufseigenschaften sowie ein Verfahren zu ihrer Herstellung, die sich insbesondere zum Einsatz als Bindemittel für Anstrichfarben und Beschichtungsmassen eignen.

**EP 0 671 420 A2**

Diese Erfindung betrifft Schutzkolloid-stabilisierte Polyacrylat-Dispersionen mit verbesserter Wasserfestigkeit und guten Verlaufseigenschaften sowie ein Verfahren zu ihrer Herstellung, die sich insbesondere zum Einsatz als Bindemittel für Anstrichfarben und Beschichtungsmassen eignen.

Es ist bekannt, daß wäßrige Polyacrylat-Dispersionen als Bindemittel für Anstrichfarben und Beschichtungsmassen geeignet sind, bei denen hohe Anforderungen an besonders gute Witterungs- und Lichtstabilität gestellt werden. Dabei ist eine möglichst geringe Wasseraufnahme der Farbanstriche und Beschichtungen im Hinblick auf deren Langlebigkeit erforderlich. Gleichzeitig werden gute Verarbeitungseigenschaften der Farben und Beschichtungen gefordert, die sich in gleichmäßiger Verteilung und glattem Verlauf auf dem Untergrund äußern.

Zur exakten Einstellung dieser Verlaufseigenschaften werden den Rezepturen häufig wasserlösliche Polymere als Verdicker und rheologische Hilfsmittel zugesetzt. Solche Polymere können aber auch direkt als stabilisierende Schutzkolloide bei der Herstellung der wäßrigen Kunststoffdispersionen eingesetzt werden. Geeignete Schutzkolloide bei Polyacrylat-Dispersionen sind nach der Lehre von EP 0 513 889 und USP 4 670 505 beispielsweise Hydroxyethylcellulose, Polyvinylalkohol oder Polyvinylpyrrolidon. Wie auch in EP 0 009 772 beschrieben, kann durch diese Maßnahme das Fließverhalten der Polyacrylat-Dispersionen sowie die rheologischen Eigenschaften von Anstrichen auf Basis dieser Dispersionen verbessert werden.

In der Regel werden bei diesen Verfahren die Schutzkolloide zusätzlich zu den üblichen Mengen an anionischen und/oder nichtionischen Emulgatoren zugesetzt. Gegenüber herkömmlichen, nur mit niedermolekularen, anionischen und/oder nichtionischen Emulgatoren stabilisierten Dispersionen bewirkt die Gesamtmenge an Schutzkolloiden und Emulgatoren aber einen erheblichen Anstieg der Wasseraufnahme der Dispersionsfilme sowie der mit diesen Bindemitteln hergestellten Anstriche und Beschichtungen. Die Wasseraufnahme getrockneter Filme aus solchen Dispersionen mit einer minimalen Filmbildungstemperatur unter 20 °C liegt nach der Lehre von EP 0 513 889 über 20 % bezogen auf das Eigengewicht des Films. Trotz der verbesserten Fließ- und Verlaufseigenschaften der Schutzkolloid-stabilisierten Dispersionen wird daher das Problem der Wasserfestigkeit solcher Bindemittel vom Stand der Technik nur unzureichend gelöst.

Weiterhin ist nach dem Stand der Technik der Einsatz von wasserlöslichen Reglern bei der Herstellung Schutzkolloid-stabilisierter Acrylatdispersionen unumgänglich, um die Latexviskosität zu beherrschen. Beispielsweise werden nach US 4 670 505 wasserlösliche Aminoalkohole sowie nach EP 0 009 772 wasserlösliche Glykole und Thioderivate eingesetzt. Solche wasserlöslichen Regler oder davon ausgehende Reaktionsprodukte verbleiben nach der Polymerisation in der Wasserphase und bilden zum Teil flüchtige und unangenehm riechende Verbindungen, die der Forderung nach geruchsneutralen und umweltfreundlichen, emissionsarmen Bindemitteln nicht genügen.

Es wurde nun gefunden, daß sich das Wasseraufnahmevermögen der Filme von Schutzkolloid-stabilisierten Polyacrylat-Dispersionen unter gleichzeitiger Beibehaltung guter Verlaufseigenschaften in Anstrichfarben und Beschichtungsmassen dadurch deutlich reduzieren läßt, wenn die Dispersionen gemäß Anspruch 1 eingesetzt werden. Ebenso wurde überraschenderweise gefunden, daß solche Dispersionen gute Fließeigenschaften entgegen dem Stand der Technik besitzen, obwohl sie keinen Zusatz von wasserlöslichen Reglern enthalten und außerdem ohne derartige Regler hergestellt werden können.

Gegenstand der vorliegenden Erfindung sind demnach wäßrige Schutzkolloidstabilisierte Acrylatdispersionen erhältlich durch Emulsionspolymerisation olefinisch ungesättigter Monomere in dispergierter Phase unter Verwendung eines öllöslichen, freie Radikale bildenden Initiators und eines wasserlöslichen Reduktionsmittels bei Reaktionstemperaturen zwischen 40 und 90 °C, wobei

I. ein Gemisch von Monomeren bestehend aus

a) 40 bis 99,9 Gew.-% Alkyl(meth-)acrylaten mit 1 bis 18 Kohlenstoffatomen in der Alkylkette,
b) 0,1 bis 10 Gew.-% einer olefinisch ungesättigten Carbonsäure, die vor der Polymerisation ganz oder teilweise neutralisiert wird,
c) gegebenenfalls bis zu 40 Gew.-% weiterer olefinisch ungesättigter Monomere, und
d) gegebenenfalls bis zu 10 Gew.-% weiterer olefinisch ungesättigten Monomere mit funktionellen Gruppen in Gegenwart

II. eines Gemisches bestehend aus, jeweils bezogen auf die Gesamtmenge der Monomere,

a) 0,5 bis 10 Gew.-% Polyvinylalkohol,
b) 0,05 bis 2 Gew.-% Hydroxyethylcellulose und
c) gegebenenfalls bis zu 0,2 Gew.-% eines anionischen und/oder nichtionischen Emulgators,

ohne Zusatz wasserlöslicher Regler polymerisiert und außerdem die olefinisch ungesättigten Carbonsäure vor Beginn der Polymerisation ganz oder teilweise neutralisiert wird, sowie ein Verfahren zu ihrer Herstellung.

Die erfindungsgemäßen Polyacrylat-Dispersionen sind erhältlich durch Emulsionspolymerisation von Alkylestern der Acrylsäure bzw. Methacrylsäure. Geeignete Monomere sind die (Meth-)Acrylsäurealkylester mit 1 bis 18 Kohlenstoffatomen in der Alkylkette. Bevorzugt sind die linearen und verzweigten Alkylester der (Meth-)Acrylsäure mit 1 bis 8 Kohlenstoffatomen in der Alkylkette. Besonders bevorzugt sind Methylmethacrylat als hartes Monomer sowie Butylacrylat und Ethylhexylacrylat als weiche Monomere. Diese Alkyl-(meth-)acrylate werden in einem Gehalt von 40 bis 99,9 Gew.-% bezogen auf die Gesamtmenge der Monomeren I eingesetzt.

Zur Polymerisation wird ein hartes und ein weiches Monomer bzw. ein Gemisch mehrerer weicher sowie ein Gemisch mehrerer harter Monomere eingesetzt. Die Bezeichnung 'hart' und 'weich' bezieht sich dabei auf die Lage der Glasübergangstemperatur des aus dem jeweiligen Monomer hergestellten Homopolymers relativ zur Raumtemperatur. So bilden weiche Monomere Polymere mit einer Glasübergangstemperatur unterhalb Raumtemperatur, harte Monomere solche mit einer Glasübergangstemperatur oberhalb Raumtemperatur. Durch das Mischungsverhältnis von harten und wichen Monomeren kann die Glasübergangstemperatur des Mischpolymerisats unterhalb der Umgebungstemperatur eingestellt werden. Es werden bevorzugt solche Mischungsverhältnisse von harten und weichen Monomeren angestrebt, bei den die Polymerisate bei Raumtemperatur spontan zusammenhängende Filme bilden. Insbesondere sollte die minimale Filmbildungstemperatur unter 20 °C betragen.

In den Dispersionen werden ebenfalls 0,1 bis 10 Gew.-% bezogen auf die Gesamtmenge der Monomeren I, bevorzugt 0,1 bis 5 Gew.-%, einer olefinisch ungesättigten Carbonsäure eingesetzt. Dazu eigne sich insbesondere Acrylsäure, Methacrylsäure, Fumarsäure, Maleinsäure oder Itakonsäure. Besonders bevorzugt werden Acrylsäure und Methacrylsäure eingesetzt. Dabei ist es für das erfolgreiche Herstellen der erfindungsgemäßen Dispersionen von Bedeutung, daß vor Polymerisation die teilweise oder vollständige Neutralisation der Carbonsäure bei erhörtem pH-Wert durchgeführt wurde. Zur Neutralisation der ungesättigten Carbonsäure eignen sich besonders nichtflüchtige Basen wie Alkalihydroxide insbesondere Natriumhydroxid. Diese werden in einer Menge zugegeben, die 0,7 bis 1,3 molaren Äquivalenten bezogen auf die Menge der eingesetzten Carbonsäure entspricht.

Daneben können die Dispersionen gegebenenfalls weitere olefinisch ungesättigten Monomere in Mengen bis zu 40 Gew.-% bezogen auf die Gesamtmenge der Monomeren I enthalten. Dazu eignen sich vinylaromatische Monomere wie z.B. Styrol, Vinylester mit 2 bis 12 Kohlenstoffatomen in der Säurekomponente, Diene wie Butadien und Isopren sowie halogenhaltige Monomere, wie z.B. Vinylchlorid.

Weiterhin können die Dispersionen als Comonomere funktionelle Monomere wie olefinisch ungesättigte Amide, Hydroxyverbindungen und Sulfonsäuren bzw. deren wasserlösliche Salze enthalten. Beispiele hierfür sind (Meth-)Acrylamid, Hydroxyalkyl(meth)acrylate wie, z.B. Hydroxyethylacrylat, Styrolsulfonat oder Sulfoalkyl(meth-)acrylate wie z.B. Sulfopropylmethacrylat. Der Gehalt an diesen Comonomeren beträgt in Summe bis zu 10 Gew.-% bezogen auf die Gesamtmenge an Monomeren I, vorzugsweise 0,2 bis 5 Gew.-%. Dabei können einzelne oder mehrere Comonomere im Gemisch eingesetzt werden. Bevorzugt wird (Meth)Acrylamid eingesetzt.

Zur kolloidalen Stabilisierung der erfindungsgemäßen, wäßrigen Dispersionen enthalten diese ein Gemisch II aus polymeren, nichtionischen Schutzkolloiden, welches aus Polyvinylalkohol und Hydroxyethylcellulose besteht. Der Gehalt an Polyvinylalkohol im Polymerisat betragt 0,5 bis 10 Gew.-% bezogen auf 100 Gew.-% der Monomeren I, vorzugsweise 0,5 bis 5 Gew.-%. Der Anteil an Hydroxyethylcellulose beträgt 0,05 bis 2 Gew.-% bezogen auf 100 Gew.-% der Monomeren I, bevorzugt 0,05 bis 0,5 Gew.-%.

Geeignete Polyvinylalkohole haben einen mittleren Polymerisationsgrad von 20 bis 2000 und einen Verseifungsgrad von 70 bis 100 %. Bevorzugt sind Polyvinylalkohole mit einem Verseifungsgrad von 86 bis 90 %. Bevorzugte Hydroxyethylcellulosen sind in verdünnter wäßriger Lösung klar löslich und haben eine Lösungsviskosität kleiner als 100 mPa•s bei 20 °C in einer Konzentration von 2 Gew.-% in Wasser.

Neben diesen Schutzkolloiden können gegebenenfalls anionische und/oder nichtionische Emulgatoren in einer Menge von bis zu 0,2 Gew.-% bezogen auf 100 Gew.-% der Monomeren I in den Dispersionen enthalten sein. Als anionischen Emulgatoren eignen sich beispielsweise Fettalkoholsulfate, Paraffinsulfonate, wasserlösliche Salze von Fettsäuren sowie sulfatierte Fettalkohol- und Alkylphenolethoxylate. Als geeignete nichtionische Emulgatoren können die Ethoxylierungsprodukte von Fettalkoholen, Fettsäuren und Alkylphenolen eingesetzt werden. Bevorzugt sind jedoch solche Dispersionen, die keine weiteren anionischen oder nichtionischen Emulgatoren enthalten. Dadurch wird der Gehalt an nicht-polymeren hydrophilen Inhaltsstoffen, die auch zu erhöhten Wasseraufnahmen beitragen, weiter reduziert.

Die erfindungsgemäßen, wäßrigen Dispersionen werden nach dem Verfahren der Emulsionspolymerisation hergestellt. Die Herstellung erfolgt bei einer Reaktionstemperatur von 40 bis 90 °C, vorzugsweise zwischen 60 und 85 °C.

EP 0 671 420 A2

Die Monomere können komplett vorgelegt, in einzelnen Portionen zugegeben oder semikontinuierlich zudosiert werden. Bevorzugt werden die Monomere nach einem semikontinuierlichen Monomerzulaufverfahren zugegeben. Die Comonomere und Schutzkolloide können ebenfalls ganz oder teilweise zudosiert werden oder zu Beginn der Polymerisation vorgelegt werden. Bevorzugt ist ein Verfahren, in dem die Gesamtmenge an Schutzkolloid in die Vorlage gegeben wird.

Als radikalische Initiatoren werden öl- oder wasserlösliche Azoinitiatoren, Peroxide, Hydroperoxide oder Peroxodisulfate oder Gemische aus diesen in einer Menge von 0,05 bis 3 Gew.-% bezogen auf die Gesamtmenge an Monomeren eingesetzt. Zusätzlich können 0,05 bis 3 Gew.-% eines Reduktionsmittels wie Natriumformaldehydsulfoxylat, Natriumbisulfit oder Ascorbinsäure eingesetzt werden. In einer bevorzugten Ausführungsform werden 0,2 bis 2 Gew.-% eines öllöslichen Hydroperoxids oder Peroxids in die Vorlage gegeben und 0,2 bis 2 Gew.-% eines Reduktionsmittels als wäßrige Lösung semikontinuierlich während der Reaktion zudosiert.

Zur Regelung des Molekulargewichts können nach Bedarf öllösliche Regler eingesetzt werden. Dazu eignen sich halogenierte Kohlenwasserstoffe oder bevorzugt lineare oder verzweigte Alkylmercaptane mit 6 bis 12 Kohlenstoffatomen in der Alkylkette. Die Regler werden einzeln oder im Gemisch in einem Gehalt von 0,01 bis 2 Gew.-% bezogen auf die Gesamtmenge an Monomeren I eingesetzt. Die Regler können in die Vorlage gegeben oder semikontinuierlich zudosiert werden.

Entgegen den im Stand der Technik beschriebenen Notwendigkeiten zum Einsatz von wasserlöslichen Reglern werden bei der Herstellung der erfindungsgemäßen Dispersionen bevorzugt keine wasserlöslichen Regler zur Kontrolle der Latexviskosität eingesetzt. Trotz dieser Maßnahme werden gut zu verarbeitende Dispersionen mit guten Verlaufseigenschaften erhalten. Zudem fallen durch das Weglassen solcher Zusätze Stoffe weg, die als solche oder in Form von Reaktionsprodukten flüchtige und/oder unangenehm riechende Verbindungen darstellen. Daher eignen sich die erfindungsgemäßen Dispersionen insbesondere als emissionsarme und damit umweltverträglichere Bindemittel.

Die Herstellung der erfindungsgemäßen Dispersionen kann auch nach einem Saatlatexverfahren erfolgen. Dazu werden 0,1 bis 10 Gew.-% Saatlatex, vorzugsweise 1 bis 5 Gew. -% Saatlatex bezogen auf die Gesamtmenge an Monomeren I, in die Vorlage gegeben und die Polymerisation nach einem semikontinuierlichen Monomerzulaufverfahren durchgeführt. Die mittlere Partikelgröße des Saatlatex beträgt vorzugsweise zwischen 0,1 und 0,5 $\mu$m und besonders bevorzugt 0,15 bis 0,3 $\mu$m. Der Saatlatex kann die gleiche oder eine ähnliche Monomerzusammensetzung wie das erfindungsgemäße Polymerisat haben.

Die erfindungsgemäßen Dispersionen haben einen Feststoffgehalt von 30 bis 70 Gew.-% und bevorzugt von 40 bis 60 Gew.-%. Die Polymerpartikel haben einen mittleren Durchmesser von 0,2 bis 2 $\mu$m, vorzugsweise zwischen 0,4 und 0,9 $\mu$m. Die Dispersionen zeigen am Ende der Polymerisation einen hohen Monomerumsatz vor über 99 % und haben einen sehr geringen Gehalt an nicht umgesetztem Monomer. Die Dispersionen sind frei von feinteiligem Koagulat. Filme aus der nach einer bevorzugten Verfahrensweise hergestellten Dispersionen zeigen gegenüber dem Stand der Technik hergestellten Schutzkolloid-stabilisierten Dispersionen eine verringerte Wasseraufnahme.

Durch die Kombination der Monomere kann die minimale Filmbildungstemperatur (MFT) über weite Bereiche eingestellt werden. Besonders günstig sind Zusammensetzungen, deren MFT deutlich unter 20 °C liegt. Dadurch kann in Farbformulierungen auf den Zusatz von Weichmachern völlig verzichtet werden, wodurch die Emissionsarmut fertiger Formulierungen mit diesem Bindemittel weiter verbessert wird.

Die erfindungsgemäßen Polymerdispersionen können als Bindemittel in Farbanstrichen und Beschichtungsmassen eingesetzt werden, deren Herstellung dem Fachmann geläufig sind. In solchen Anstrichen und Beschichtungsmassen bewirken die erfindungsgemäßen Dispersionen eine erhöhte Wasserfestigkeit gegenüber dem Stand der Technik sowie insbesondere gute Verlaufs- und Verarbeitungseigenschaften.

Die Erfindung wird durch die folgenden Beispiele weiter erläutert. Die angegeben Prozentzahlen und Teile beziehen sich jeweils auf das Gewicht. Die Viskositäten wurden mit einem Brookfield-Viskosimeter bestimmt. Die verwendeten Abkürzungen bedeuten:

PVA = Polyvinylalkohol (Hydrolysegrad 88%, mittlerer Polymerisationsgrad 140)
HEC = Hydroxyethylcellulose (Viskosität ca. 100 mPa•s bei 20 °C in 2 %iger wäßriger Lösung)
Aam = Acrylamid
Maam = Methacrylamid
AS = Acrylsäure
MAS = Methacrylsäure
EM = Emulgator (C13/C17-Alkansulfonat)
FS = Feststoffgehalt

**Beispiele 1 bis 5:**

Die folgenden Beispiele zeigen die Herstellung erfindungsgemäßer Dispersionen mit verschiedenen Mengen an Schutzkolloiden und Comonomeren.

In einem Polymerisationskessel mit Rührer, Innenthermometer und Dosiereinrichtungen werden 80 Teile Wasser, 0,5 Teile tert.-Butylhydroperoxid, 0,2 Teile tert.-Dodecylmercaptan und 0,1 Teil Ethylendiamintetraessigsäure-Natriumsalz vorgelegt. Dazu werden die in der Tabelle 1 angegebenen Mengen an Schutzkolloiden und Comonomeren gegeben. Die Säure wird mit einer stöchiometrischen Menge an Natronlauge neutralisiert. Das Gemisch wird auf 75 °C erhitzt. Dann werden unter Rühren innerhalb von 5 Stunden 50 Teile Methylmethacrylat und 50 Teile Butylacrylat und innerhalb 6 Stunden 0,4 Teile Natriumformaldehydsulfoxylat in 30 Teilen Wasser zudosiert. Nach Ende der Dosierungen wird noch 2 Stunden nachpolymeri-siert.

Tabelle 1

| Beispiel Nr. | PVA (Tl.) | HEC (Tl.) | Aam (Tl.) | Maam (Tl.) | AS (Tl.) | MAS (Tl.) | EM (Tl.) | FS (%) | Viskosität (mPa·s) |
|---|---|---|---|---|---|---|---|---|---|
| 1 | 1 | 0,1 | 0,5 | - | 1 | - | - | 48,4 | 1060 |
| 2 | 1,5 | 0,2 | - | 0,5 | 1 | - | - | 48,6 | 2700 |
| 3 | 1,5 | 0,05 | - | 0,5 | 1 | - | - | 48,3 | 760 |
| 4 | 1,5 | 0,1 | - | 0,25 | 0,5 | - | - | 47,8 | 4400 |
| 5 | 1,5 | 0,2 | 0,5 | - | - | 1 | - | 48,6 | 2630 |

## Beispiele 6 bis 9

Die folgenden Beispiele zeigen die Herstellung erfindungsgemäßer Dispersionen nach einem Saatlatexverfahren.

In einem Polymerisationskessel mit Rührer, Innenthermometer und Dosiereinrichtungen werden 85 Teile Wasser, 1,2 Teile tert.-Butylhydroperoxid, 0,05 Teile Emulgator und 0,1 Teil Ethylendiamintetraessigsäure-Natriumsalz vorgelegt. Dazu werden die in der Tabelle 2 angegebenen Mengen an Schutzkolloid, Saatlatex und Comonomeren gegeben. Die Säure wird mit einer stöchiometrischen Menge an Natronlauge neutralisiert. Das Gemisch wird auf 70 °C erhitzt. Dann werden unter Rühren innerhalb von 3 Stunden soviel Teile eines 1:1-Gemisches aus Methylmethacrylat und Butylacrylat zudosiert, daß die Summe aus Saatlatex und diesen Monomeren 100 Teile ergibt. Gleichzeitig werden innerhalb 4 Stunden 1,0 Teile Natriumformaldehydsulfoxylat und 0,15 Teile Emulgator in 30 Teilen Wasser zudosiert. Nach Ende der Dosierungen wird noch eine Stunde nachpolymerisiert.

Tabelle 2

| Beispiel Nr. | Saatlatex (Tl.) | HEC (Tl.) | PVA (Tl.) | AS (Tl.) | Aam (Tl.) | FS (%) | Viskosität (mPa·s) |
|---|---|---|---|---|---|---|---|
| 6 | 1 | 0,25 | 0 | 0,5 | 0,5 | 47,0 | 960 |
| 7 | 1 | 0 | 1 | 0,5 | 0,5 | 47,2 | 2 600 |
| 8 | 1 | 0,25 | 1 | 0,5 | 0,5 | 47,8 | 3 300 |
| 9 | 5 | 0,25 | 0 | 1 | 0,5 | 47,4 | 1 700 |

Saatlatex = Styrol/Acrylat-Latex (mittlere Partikelgröße 150 nm)

**Beispiele 10 bis 12**

Die folgenden Beispiele zeigen den Einfluß des Neutralisationsgrades der olefinisch ungesättigten Säure.

In einem Polymerisationskessel mit Rührer, Innenthermometer und Dosiereinrichtungen werden 80 Teile Wasser, 0,5 Teile tert.-Butylhydroperoxid, 0,25 Teile Methacrylamid, 1,5 Teile Polyvinylalkohol, 0,2 Teile Hydroxyethylcellulose, 0,2 Teile tert.-Dodecylmercaptan und 0,1 Teil Ethylendiamintetraessigsäure-Natriumsalz vorgelegt. Dazu werden die in der Tabelle 3 angegebenen Mengen an Acrylsäure und Natronlauge gegeben. Das Gemisch wird auf 70 °C erhitzt. Dann werden unter Rühren innerhalb von 5 Stunden 50 Teile Methylmethacrylat und 50 Teile Butylacrylat und innerhalb 6 Stunden 0,4 Teile Natriumformaldehydsulfoxylat in 30 Teilen Wasser zudosiert. Nach Ende der Dosierungen wird noch 2 Stunden nachpolymerisiert.

Tabelle 3

| Beispiel Nr. | AS (Tl.) | NaOH (Tl.) | FS (%) | Viskosität (mPa·s) | Koagulat (%) |
|---|---|---|---|---|---|
| 10 | 0,5 | 0,27 | 47,8 | 4400 | 0,2 |
| 11 | 0,5 | 0,15 | vollständig koaguliert | | |
| 12 | 0,5 | 0,55 | 48,5 | 2050 | 1,0 |

## Beispiel 13 und Vergleichsbeispiel A und B

Die folgenden Beispiele zeigen die vorteilhaften Eigenschaften der erfindungsgemäßen Polyacrylat-Eigenschaften.

Beispiel 13 (erfindungsgemäß):
Dispersion mit HEC und PVA, siehe Beispiel 2.

Beispiel A (nicht erfindungsgemäßes Vergleichsbeispiel):
Dispersion wie Beispiel 2, aber nur mit HEC stabilisiert.

Beispiel B (nicht erfindungsgemäßes Vergleichsbeispiel):
Dispersion wie Beispiel 2, aber nur mit PVA stabilisiert.

Die Wasseraufnahme der Dispersionsfilme wurde in Anlehnung an DIN 53 495 bestimmt.

Die Verlaufseigenschaften der Dispersionen wurden in Standard-Farbrezepturen (Pigmentvolumenkonzentration 40 %) in Anlehnung an ASTM D 2801 bestimmt.

| Beispiel | Schutzkolloid | Wasseraufnahme | Verlaufseigenschaften |
|---|---|---|---|
| 13 | PVA + HEC | 9 % | + |
| A | HEC | 42 % | + |
| B | PVA | 8 % | - |

Das Beispiel 13 und die Vergleichsbeispiele A und B zeigen, daß eine günstige Eigenschaftskombination (geringe Wasseraufnahme, gute Verlaufseigenschaften) nur mittels der erfindungsgemäßen Dispersionen erreicht werden können. Die Vergleichsbeispiele A und B repräsentieren den Stand der Technik.

## Patentansprüche

1. Wäßrige Schutzkolloid-stabilisierte Acrylatdispersion erhältlich durch Emulsionspolymerisation olefinisch ungesättigter Monomere in dispergierter Phase unter Verwendung eines öllöslichen, freie Radikale bildenden Initiators und eines wasserlöslichen Reduktionsmittels bei Reaktionstemperaturen zwischen 40 und 90 °C, wobei

   I. ein Gemisch von Monomeren bestehend aus
      a) 40 bis 99,9 Gew.-% Alkyl(meth-)acrylaten mit 1 bis 18 Kohlenstoffatomen in der Alkylkette,
      b) 0,1 bis 10 Gew.-% einer olefinisch ungesättigten Carbonsäure, die vor der Polymerisation ganz oder teilweise neutralisiert wird,
      c) gegebenenfalls bis zu 40 Gew.-% weiterer olefinisch ungesättigter Monomere, und
      d) gegebenenfalls bis zu 10 Gew.-% weiterer olefinisch ungesättigten Monomere mit funktionellen Gruppen in Gegenwart

   II. eines Gemisches bestehend aus, jeweils bezogen auf die Gesamtmenge der Monomere,

EP 0 671 420 A2

a) 0,5 bis 10 Gew.-% Polyvinylalkohol,
b) 0,05 bis 2 Gew.-% Hydroxyethylcellulose und
c) gegebenenfalls bis zu 0,2 Gew.-% eines anionischen und/oder nichtionischen Emulgators,
ohne Zusatz wasserlöslicher Regler polymerisiert und außerdem die olefinisch ungesättigten Carbonsäure vor Beginn der Polymerisation ganz oder teilweise neutralisiert wird.

2. Schutzkolloid-stabilisierte Acrylatdispersion gemäß Anspruch 1,
dadurch gekennzeichnet,
daß zur Neutralisation der Carbonsäure 0,7 bis 1,3 molare Äquivalente eines nichtflüchtigen Alkalihydroxids eingesetzt werden.

3. Verfahren zur Herstellung von wäßrigen Schutzkolloid-stabilisierten Acrylatdispersionen erhältlich durch Emulsionspolymerisation olefinisch ungesättigter Monomere in dispergierter Phase unter Verwendung eines öllöslichen, freie Radikale bildenden Initiators und eines wasserlöslichen Reduktionsmittels bei Reaktionstemperaturen zwischen 40 und 90 °C,
dadurch gekennzeichnet, daß
I. ein Gemisch von Monomeren bestehend aus
a) 40 bis 99,9 Gew.-% Alkyl(meth-)acrylaten mit 1 bis 18 Kohlenstoffatomen in der Alkylkette,
b) 0,1 bis 10 Gew.-% einer olefinisch ungesättigten Carbonsäure, die vor der Polymerisation ganz oder teilweise neutralisiert wird,
c) gegebenenfalls bis zu 40 Gew.-% weiterer olefinisch ungesättigter Monomere, und
d) gegebenenfalls bis zu 10 Gew.-% weiterer olefinisch ungesättigten Monomere mit funktionellen Gruppen in Gegenwart
II. eines Gemisches bestehend aus, jeweils bezogen auf die Gesamtmenge der Monomere,
a) 0,5 bis 10 Gew.-% Polyvinylalkohol,
b) 0,05 bis 2 Gew.-% Hydroxyethylcellulose und
c) gegebenenfalls bis zu 0,2 Gew.-% eines anionischen und/oder nichtionischen Emulgators,
ohne Zusatz wasserlöslicher Regler polymerisiert und außerdem die olefinisch ungesättigten Carbonsäure vor Beginn der Polymerisation ganz oder teilweise neutralisiert wird.

4. Verfahren gemäß Anspruch 3,
dadurch gekennzeichnet,
daß das Gemisch der Schutzkolloide in die Vorlage gegeben und das Monomerengemisch semikontinuierlich im Zulauf zugegeben wird.

5. Verfahren gemäß den Ansprüchen 3 und 4,
dadurch gekennzeichnet,
daß die Polymerisation in Gegenwart von 0,1 bis 5 Gew.-% eines Saatlatex durchgeführt wird.

6. Verwendung von wäßrigen Acrylatdispersionen gemäß Anspruch 1 oder 2, hergestellt nach einem der Ansprüche 3 bis 5, in Anstrichs- und Beschichtungsmassen.